# EUROPEAN PATENT APPLICATION

(11) **EP 4 693 947 A1**
(43) Date of publication of application: **11.02.2026**
(21) Application number: 23936446.6
(22) Date of filing: 05.12.2023
(51) Int. Cl.: H04B 10/077, H04B 10/079

(54) **FIBER SEARCHING APPARATUS, PROCESSING APPARATUS, FIBER SEARCHING SYSTEM, AND FIBER SEARCHING METHOD**

(30) Priority: 10.05.2023 CN 202310524455
(71) Applicant: Huawei Technologies Co., Ltd., Shenzhen, Guangdong 518129 (CN)
(72) Inventor: LI, Weiguo, Shenzhen, Guangdong 518129 (CN); ZHONG, Xiaoxu, Shenzhen, Guangdong 518129 (CN); XU, Jiahuan, Shenzhen, Guangdong 518129 (CN); LI, Xiong, Shenzhen, Guangdong 518129 (CN)
(74) Representative: Goddar, Heinz J.
(86) International application number: PCT/CN2023/136405
(87) International publication number: WO 2024/230142

(57) **Abstract**

This application provides a fiber seeking apparatus, a processing apparatus, a fiber seeking system, and a fiber seeking method. The fiber seeking system includes a fiber seeking apparatus and a processing apparatus. The fiber seeking apparatus includes a signal detector. The signal detector includes at least one detection part, a first processing module, and a communication module. Each detection part is configured to clamp a signal detection area of an optical fiber, and detect optical signal strength in the signal detection area of the clamped optical fiber. The first processing module is configured to: when a change amplitude of the optical signal strength detected by the detection part exceeds a specified threshold, send identification information of the detection part to the processing apparatus, so that the processing apparatus determines port information of a second end of a to-be-sought optical fiber based on the received identification information and a preset correspondence, and matches the port information of the second end of the to-be-sought optical fiber with pre-obtained port information of a first end of the to-be-sought optical fiber. In this way, port information of two ends of an optical fiber can be quickly and accurately matched without interrupting a live network service, and a fiber seeking distance is long.

## Description

### CROSS-REFERENCE TO RELATED APPLICATION

This application claims priority to Chinese Patent Application No. 202310524455.2, filed with the China National Intellectual Property Administration on May 10, 2023 and entitled "FIBER SEEKING APPARATUS, PROCESSING APPARATUS, FIBER SEEKING SYSTEM, AND FIBER SEEKING METHOD", which is incorporated herein by reference in its entirety.

### TECHNICAL FIELD

This application relates to the field of optical fiber communication technologies, and in particular, to a fiber seeking apparatus, a processing apparatus, a fiber seeking system, and a fiber seeking method.

### BACKGROUND

With the rapid development of the communication industry, there are an increasing quantity of optical fibers in an optical communication network. Because the optical fibers are passive transmission media, it is very difficult for a communication device network element to effectively monitor and manage dumb resources of an optical fiber network. As a result, it is difficult to manage the optical fibers, and there are problems that a large quantity of optical fiber routes are invisible, resources are unknown, faults are difficult to locate, and the like.

In a related technology, optical fibers in the optical communication network are mainly manually managed, and it is difficult to quickly and accurately match port information of two ends of the optical fibers.

### SUMMARY

Embodiments of this application provide a fiber seeking apparatus, a processing apparatus, a fiber seeking system, and a fiber seeking method, to quickly and accurately match port information of two ends of an optical fiber.

According to a first aspect, an embodiment of this application provides a fiber seeking system. The fiber seeking system provided in this embodiment of this application may include a fiber seeking apparatus and a processing apparatus. The fiber seeking system is configured to match port information of a first end with port information of a second end of an optical fiber. During specific implementation, according to a flow direction of light in the optical fiber, an upstream end of the optical fiber may be the first end, and a downstream end of the optical fiber may be the second end. In this embodiment of this application, an example in which the upstream end of the optical fiber is the first end, and the downstream end of the optical fiber is the second end is used for description. In some cases, the upstream end of the optical fiber may alternatively be the second end, and the downstream end of the optical fiber may alternatively be the first end. This is not limited herein. The port information of the first end may be information about the first end, or may be information about a device connected to the first end. The port information of the second end may be information about the second end, or may be information about a device connected to the second end.

The fiber seeking apparatus may include a signal detector. The signal detector may include at least one detection part, a first processing module, and a communication module. Each detection part may be configured to clamp a signal detection area of an optical fiber and may be configured to detect optical signal strength in the signal detection area of the clamped optical fiber. Different detection parts are configured to clamp signal detection areas of different optical fibers and are configured to detect optical signal strength in the signal detection areas of the clamped different optical fibers. A signal detection area of any optical fiber is close to a second end of the optical fiber. The first processing module is configured to compare a change amplitude of the optical signal strength detected by each detection part with a specified threshold, to determine a target detection part. The target detection part is a detection part in which the change amplitude of the optical signal strength of the signal detection area exceeds the specified threshold. The communication module is configured to send identification information of the target detection part to the processing apparatus.

The processing apparatus is configured to: receive the identification information that is of the target detection part and that is sent by the signal detector; determine port information of a second end of a to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers; and match the port information of the second end of the to-be-sought optical fiber with pre-obtained port information of a first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds a specified threshold.

In this embodiment of this application, there may be one or more signal detectors in the fiber seeking apparatus, and there may be one or more detection parts in the signal detector. During specific implementation, quantities of signal detectors and detection parts may be set according to an actual requirement, and this is not limited herein.

The following describes a process of performing fiber seeking by using the fiber seeking system in this embodiment of this application.

When fiber seeking is performed on a plurality of optical fibers, a signal detector may be installed at a second end of each optical fiber. Specifically, a signal detection area of each optical fiber may be clamped by a detection part. Optionally, there may be one or more signal detectors, and one or more detection parts may be disposed for each signal detector. Identification information of each detection part is bound with port information of the second end of each corresponding clamped optical fiber, and a correspondence between the identification information of the detection part and the port information of the second end of the optical fiber is pre-stored in the processing apparatus.

Then, one optical fiber is selected from the plurality of optical fibers to be used as a to-be-sought optical fiber, and port information of a first end of the to-be-sought optical fiber is stored in the processing apparatus. A fiber seeking signal is applied to a signal input area of the to-be-sought optical fiber, where the signal input area is an area close to the first end of the to-be-sought optical fiber. Because the fiber seeking signal may cause a strength change in an optical signal transmitted in the optical fiber, the detection part may detect optical signal strength of the clamped optical fiber in the signal detection area. When the optical signal strength detected by the detection part is greater than the specified threshold, it indicates that a change amplitude of the optical signal strength of the optical fiber clamped by the detection part is large, that is, the optical fiber clamped by the detection part is the to-be-sought optical fiber. Optical signal strength detected by each detection part may be monitored by using the signal detector, and when a change amplitude of the optical signal strength detected by the detection part exceeds the specified threshold, identification information of the detection part is sent to the processing apparatus.

Then, the processing apparatus may determine port information of a second end of the to-be-sought optical fiber based on the received identification information of the detection part and a preset correspondence (a one-to-one correspondence between identification information of a plurality of detection parts and port information of second ends of the plurality of optical fibers), and match the port information of the second end of the to-be-sought optical fiber with the pre-obtained port information of the first end of the to-be-sought optical fiber.

Then, another optical fiber is selected from the plurality of optical fibers to be used as the to-be-sought optical fiber, and the port information of the first end and the port information of the second end of the to-be-sought optical fiber are matched in the foregoing manner. In this way, port information of two ends of the plurality of optical fibers is matched one by one.

Based on the foregoing analysis, in the fiber seeking system provided in this embodiment of this application, the signal detector is disposed in the fiber seeking apparatus, and the signal detector includes at least one detection part. In the fiber seeking process, the detection part in the signal detector may clamp the signal detection area of the optical fiber, and a fiber seeking signal is applied to the signal input area of the to-be-sought optical fiber. When the change amplitude of the optical signal strength of the detection part exceeds the specified threshold, the signal detector may send the identification information of the detection part to the processing apparatus, and the processing apparatus performs data processing, so that the port information of the first end of the to-be-sought optical fiber can be matched with the port information of the second end. In this way, port information of two ends of the optical fiber can be quickly and accurately matched, and the optical fiber does not need to be removed. Therefore, a connection relationship between the optical fiber and another device is not affected, and a live network service does not need to be interrupted.

In addition, the fiber seeking signal may cause the strength change in the optical signal transmitted in the optical fiber. In this way, the detection part detects the optical signal strength in the signal detection area of the optical fiber, and determines whether the change amplitude of the optical signal strength exceeds the specified threshold, so that the port information of the second end of the to-be-sought optical fiber can be determined, thereby implementing matching between the port information of the first end of the optical fiber and the port information of the second end. In the fiber seeking process, fiber seeking is performed based on the strength change of the optical signal transmitted in the optical fiber. A transmission distance of a service optical signal transmitted in the optical fiber is long, and generally ranges from 40 km to 80 km. Therefore, a fiber seeking distance is basically consistent with the transmission distance of the service optical signal. In this embodiment of this application, the fiber seeking distance is long, and may generally reach 20 km, or even range from 40 km to 80 km, so that cross-site detection of the optical fiber can be implemented.

In some embodiments of this application, when service light is transmitted in an optical fiber, fiber seeking may be performed based on a strength change of an optical signal transmitted in the optical fiber. Specifically, a specified degree of macrobending on a to-be-sought optical fiber may be controlled in the signal input area. For example, a radius of the macrobending may be about 5.9 mm, leading to generation of leakage light of the to-be-sought optical fiber in the signal input area, so that strength of an optical signal transmitted in the to-be-sought optical fiber is attenuated to some extent (that is, a strength change in the optical signal transmitted in the to-be-sought optical fiber is caused), and the fiber seeking signal is applied to the signal input area. The detection part clamps the signal detection area of the optical fiber, to cause a specified degree of macrobending on the optical fiber in the signal detection area. For example, a radius of the macrobending may be about 5.9 mm, leading to generation of leakage light of the optical fiber in the signal detection area. If the specified degree of macrobending is applied to the optical fiber in the signal input area, the strength of the optical signal transmitted in the optical fiber decreases, and intensity of the leakage light of the optical fiber in the signal detection area also decreases accordingly. Therefore, whether the optical fiber is the to-be-sought optical fiber can be determined by detecting the intensity of the leakage light of the optical fiber in the signal detection area (that is, detecting the optical signal strength of the signal detection area of the optical fiber), and determining whether a change amplitude of the intensity of the leakage light exceeds the specified threshold.

In the fiber seeking process, the fiber seeking signal may cause the optical signal transmitted in the optical fiber to be changed by about 1 dB. To be specific, the fiber seeking process has little impact on the optical signal in the to-be-sought optical fiber, and the fiber seeking process does not affect the live network service.

During specific implementation, the fiber seeking signal may be applied to the signal input area of the to-be-sought optical fiber in a plurality of manners. The following describes several manners by using examples.

### Manner 1:

The fiber seeking apparatus may further include a signal generator. The signal generator is configured to clamp a signal input area of any optical fiber and is configured to apply a fiber seeking signal to the signal input area of the clamped optical fiber. The fiber seeking signal is used to cause a strength change in an optical signal transmitted in the optical fiber, and the signal input area of any optical fiber is close to a first end of the optical fiber. In this embodiment of this application, there may be one or more signal generators in the fiber seeking apparatus.

In the fiber seeking process, the signal generator may clamp the signal input area of the to-be-sought optical fiber, to cause a specified degree of macrobending on the to-be-sought optical fiber in the signal input area, leading to generation of leakage light of the to-be-sought optical fiber in the signal input area, so that the strength of an optical signal transmitted in the to-be-sought optical fiber is attenuated, and the fiber seeking signal is applied to the signal input area.

### Manner 2:

A manner of manually bending the signal input area of the to-be-sought optical fiber may be used, to cause a specified degree of macrobending on the to-be-sought optical fiber in the signal input area, leading to generation of leakage light of the to-be-sought optical fiber in the signal input area, so that the strength of an optical signal transmitted in the to-be-sought optical fiber is attenuated, and the fiber seeking signal is applied to the signal input area.

In some other embodiments of this application, when no service light is transmitted in the to-be-sought optical fiber, the fiber seeking signal may be injected into the first end of the to-be-sought optical fiber. For example, analog service light or an optical signal (for example, red light) of another band may be injected into the first end of the to-be-sought optical fiber, so that strength of an optical signal transmitted in the to-be-sought optical fiber increases. The detection part clamps the signal detection area of the optical fiber, to cause a specified degree of macrobending on the optical fiber in the signal detection area. For example, a radius of the macrobending may be about 5.9 mm, leading to generation of leakage light of the optical fiber in the signal detection area. If the fiber seeking signal is injected into the first end of the optical fiber, the strength of the optical signal transmitted in the optical fiber increases, and intensity of the leakage light of the optical fiber in the signal detection area also increases accordingly. Therefore, whether the optical fiber is the to-be-sought optical fiber can be determined by detecting the intensity of the leakage light of the optical fiber in the signal detection area (that is, detecting the optical signal strength of the signal detection area of the optical fiber), and determining whether an intensity change of the leakage light exceeds the specified threshold.

During specific implementation, to prevent a misoperation of the fiber seeking apparatus caused by a strength change of an optical signal generated during normal service interaction or manual sorting of optical fibers, the specified threshold may be set to be greater than a value of the strength change of the optical signal generated during normal service interaction or manual sorting of optical fibers. For example, the specified threshold may be set to be greater than 0.2 dB, for example, may be set to 0.5 dB, 0.6 dB, 1 dB, or another value. Certainly, a value of the specified threshold cannot be excessively large, to prevent a case in which the to-be-sought optical fiber cannot be determined because the specified threshold is excessively large. A specific value of the specified threshold may be set according to an actual application scenario, and this is not limited herein.

Further, in some embodiments of this application, the fiber seeking system may further include an optical fiber management platform. The optical fiber management platform is configured to receive and store pairing information sent by the processing apparatus. The pairing information includes the port information of the first end and the port information of the second end of the to-be-sought optical fiber. During specific implementation, after matching the port information of the second end of the to-be-sought optical fiber with the port information of the first end, the processing apparatus may send the matched pairing information of the optical fiber to the optical fiber management platform, and the optical fiber management platform may store pairing information of the plurality of optical fibers, thereby implementing digital management of the optical fibers.

In a possible implementation, the signal detector may directly communicate with the processing apparatus, that is, the signal detector may directly send the identification information of the target detection part to the processing apparatus.

In another possible implementation, the signal detector may indirectly communicate with the processing apparatus. Specifically, the signal detector may be configured to send, to the optical fiber management platform, identification information of the target detection part in which a change amplitude of optical signal strength exceeds the specified threshold. The optical fiber management platform may be further configured to receive the identification information of the target detection part, and send the received identification information of the target detection part to the processing apparatus. In other words, the optical fiber management platform may also play an information transmission role. The signal detector may send the identification information of the target detection part to the processing apparatus through the optical fiber management platform, so that the processing apparatus determines the port information of the second end of the to-be-sought optical fiber based on received identification information of the target detection part and the preset correspondence, matches the port information of the second end of the to-be-sought optical fiber with the pre-obtained port information of the first end of the to-be-sought optical fiber, and sends the matched pairing information to the optical fiber management platform.

In actual application, the processing apparatus may be a mobile terminal having a processing function, like a mobile phone or a tablet, or the processing apparatus may be a component having a processing function, like a chip or a circuit board, or the processing apparatus may be a device having a processing function, like a computer or a server. This is not limited herein. The optical fiber management platform may be a device with a powerful processing function, like a computer or a server.

The following describes in detail a specific structure of the fiber seeking apparatus in this embodiment of this application.

The signal generator may include a first clamping member. The first clamping member is configured to clamp the signal input area of the any optical fiber, to cause a specified degree of macrobending on the clamped optical fiber, leading to generation of leakage light of the optical fiber in the signal input area, so as to apply the fiber seeking signal to the signal input area.

In the fiber seeking process, the first clamping member of the signal generator may clamp the signal input area of the to-be-sought optical fiber, to cause the specified degree of macrobending on the to-be-sought optical fiber in the signal input area. For example, a radius of the macrobending may be about 5.9 mm, leading to generation of leakage light of the to-be-sought optical fiber in the signal input area, so that strength of an optical signal transmitted in the to-be-sought optical fiber is attenuated, and the fiber seeking signal is applied to the signal input area of the to-be-sought optical fiber.

In a possible implementation, the first clamping member may include a slot and a sliding cover. The signal input area of the optical fiber may be placed in the slot, and then the sliding cover is controlled to cooperate with the slot, to cause the specified degree of macrobending on the optical fiber. During specific implementation, a sliding rail may be disposed in the signal generator, the sliding cover may slide along the sliding rail, and the sliding cover is pushed to slide to cooperate with the slot, to cause macrobending on the optical fiber. Alternatively, a button for controlling slide of the sliding cover may be disposed in the signal generator, and the button is used to control the sliding cover to cooperate with the slot, to cause macrobending on the optical fiber. Alternatively, a bolt for driving the sliding cover to move may be disposed in the signal generator, and the sliding cover is driven to move by screwing the bolt, so as to cooperate with the slot to cause macrobending on the optical fiber. Certainly, other manners may alternatively be used to control the slide of the sliding cover. Details are not described herein one by one. In a possible implementation, the sliding cover may be arc-shaped, and the sliding cover may move in a specified direction by pressing the sliding cover. During specific implementation, the optical fiber may be placed in the slot, and then the sliding cover is pressed, so that one end of the sliding cover moves to a position of the slot. The sliding cover and the slot cooperate with each other to cause a specified degree of macrobending on the optical fiber.

In another possible implementation, the first clamping member may alternatively be a fixture. In the fiber seeking process, the fixture may be opened for placing the to-be-sought optical fiber inside the fixture, and the fixture is closed to cause the specified degree of macrobending on the optical fiber. Certainly, the first clamping member in this embodiment of this application may alternatively be implemented in another manner. Details are not described herein one by one.

Further, the signal generator may further include a signal source configured to provide the fiber seeking signal. The signal source is configured to: when no service light is transmitted in any optical fiber, inject the fiber seeking signal into the first end of the optical fiber. Specifically, the signal source may generate analog service light or an optical signal (for example, red light) of another band to be used as the fiber seeking signal. The fiber seeking signal is injected into the first end of the to-be-sought optical fiber, so that strength of the optical signal transmitted in the to-be-sought optical fiber can be increased. Therefore, whether the optical fiber is the to-be-sought optical fiber can be determined by the signal detector detecting the optical signal strength of the optical fiber in the signal detection area, and determining whether the change amplitude of the optical signal strength exceeds the specified threshold.

In a possible implementation, the signal detector may include at least one detection part, a first processing module, and a communication module. The first processing module is configured to compare a change amplitude of the optical signal strength detected by each detection part with a specified threshold, to determine a target detection part. The target detection part is a detection part in which the change amplitude of the optical signal strength of the signal detection area exceeds the specified threshold. The communication module is configured to send identification information of the target detection part to the processing apparatus. During specific implementation, the first processing module may be in electrical signal connection to each detection part in the signal detector.

Optionally, the communication module may be a component having a communication function, for example, a Bluetooth module or a SIM card.

In some embodiments of this application, the signal detector may include a plurality of detection part groups, and each detection part group may include a plurality of detection parts. During specific implementation, a quantity of detection part groups and a quantity of detection parts in each detection part group may be set according to an actual requirement, and this is not limited herein.

In addition, the signal detector may further include a plurality of second processing modules. Each detection part group is in electrical signal connection to one second processing module. The second processing module is configured to: compare a change amplitude of optical signal strength detected by each detection part in the connected detection part group with the specified threshold, to determine a target detection part; and send the identification information of the target detection part to the first processing module. The target detection part is a detection part in which the change amplitude of the optical signal strength of the signal detection area exceeds the specified threshold. In this embodiment of this application, the plurality of detection parts in the signal detector are divided into a plurality of detection part groups, and second processing modules that one-to-one correspond to the plurality of detection part groups are disposed. The second processing module processes detection data generated by each detection part in a corresponding detection part group, and sends a processing result (that is, identification information of a detection part detecting that the change amplitude of the optical signal strength exceeds the specified threshold) to the first processing module, so that a data processing amount of the first processing module can be reduced, and a data processing speed can be improved.

In a possible implementation, the detection part may include a second clamping member and a light-sensitive sensor. The second clamping member is configured to clamp the signal detection area of the any optical fiber, to cause a specified degree of macrobending on the optical fiber, leading to generation of leakage light of the optical fiber in the signal detection area. The light-sensitive sensor is located inside the second clamping member and is configured to detect light intensity of the leakage light of the optical fiber in the signal detection area.

In the fiber seeking process, the second clamping member of the detection part may clamp the signal detection area of the optical fiber, to cause the specified degree of macrobending on the optical fiber in the signal detection area. For example, a radius of the macrobending may be about 5.9 mm, leading to generation of leakage light of the optical fiber in the signal detection area. The light-sensitive sensor located inside the second clamping member may detect light intensity of the leakage light, to detect optical signal strength in the signal detection area.

In a possible implementation, the second clamping member may include a slot and a sliding cover. The slot and the sliding cover cooperate with each other, to clamp the signal detection area of the optical fiber and cause the specified degree of macrobending on the optical fiber. During specific implementation, a sliding rail may be disposed in the signal detection part, and the sliding cover may slide along the sliding rail, to cause macrobending on the optical fiber by pushing the sliding cover to slide to cooperate with the slot. Alternatively, a button for controlling slide of the sliding cover may be disposed in the detection part, to cause macrobending on the optical fiber by using the button to control the sliding cover to cooperate with the slot. Alternatively, a bolt for driving the sliding cover to move may be disposed in the detection part, and the sliding cover is driven to move by screwing the bolt, so as to cooperate with the slot to cause macrobending on the optical fiber. Certainly, other manners may alternatively be used to control the slide of the sliding cover. Details are not described herein one by one.

In some embodiments of this application, a plurality of second clamping members may share a same sliding cover. During specific implementation, the plurality of optical fibers may be placed in a plurality of slots respectively, and then the sliding cover shared by the slots is controlled to slide, so that the sliding cover cooperates with the slots, to cause a specified degree of macrobending on the plurality of optical fibers. In this way, the macrobending on the plurality of optical fibers can be controlled simultaneously, so that an operation procedure is simplified.

In another possible implementation, the second clamping member may alternatively be a fixture, and a light-sensitive sensor is disposed inside the fixture. In the fiber seeking process, the fixture may be opened for placing the to-be-sought optical fiber inside the fixture, and the fixture is closed to cause the specified degree of macrobending on the optical fiber. Certainly, the second clamping member in this embodiment of this application may alternatively be implemented in another manner. Details are not described herein one by one.

According to a second aspect, an embodiment of this application further provides a fiber seeking method applied to the fiber seeking system in the first aspect. The fiber seeking method applied to the fiber seeking system provided in this embodiment of this application may include: A fiber seeking apparatus sends, to a processing apparatus, identification information of a target detection part in which a change amplitude of optical signal strength exceeds a specified threshold; the processing apparatus determines port information of a second end of a to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers; and the processing apparatus matches the port information of the second end of the to-be-sought optical fiber with pre-obtained port information of a first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds a specified threshold.

According to the fiber seeking method provided in this embodiment of this application, port information of two ends of an optical fiber may be quickly and accurately matched. In addition, fiber seeking is performed based on a strength change of an optical signal transmitted in an optical fiber, and a fiber seeking distance is long, and generally may reach 20 km, or even may range from 40 km to 80 km, so that cross-site detection of the optical fiber can be implemented.

Further, the fiber seeking method in this embodiment of this application may further include: The processing apparatus sends pairing information to an optical fiber management platform, where the pairing information includes the port information of the first end and the port information of the second end of a to-be-sought optical fiber; and the optical fiber management platform receives and stores the pairing information sent by the processing apparatus.

In this embodiment of this application, the processing apparatus may send the matched pairing information of the optical fiber to the optical fiber management platform, and the optical fiber management platform may store pairing information of the plurality of optical fibers, thereby implementing digital management of the optical fibers.

In a possible implementation, the fiber seeking apparatus may directly communicate with the processing apparatus, that is, the fiber seeking apparatus may directly send the identification information of the target detection part to the processing apparatus.

In another possible implementation, the fiber seeking apparatus may indirectly communicate with the processing apparatus. That the fiber seeking apparatus sends, to the processing apparatus, the identification information of the target detection part in which the change amplitude of the optical signal strength exceeds the specified threshold may specifically include: The fiber seeking apparatus sends the identification information of the target detection part to the optical fiber management platform; and the optical fiber management platform receives the identification information of the target detection part, and sends the received identification information of the target detection part to the processing apparatus.

In other words, the optical fiber management platform may also play an information transmission role. The fiber seeking apparatus may send identification information of the target detection part to the processing apparatus through the optical fiber management platform, so that the processing apparatus determines the port information of the second end of the to-be-sought optical fiber based on the received identification information of the target detection part and the preset correspondence, matches the port information of the second end of the to-be-sought optical fiber with the pre-obtained port information of the first end of the to-be-sought optical fiber, and sends the matched pairing information to the optical fiber management platform.

According to a third aspect, an embodiment of this application further provides a processing apparatus. The processing apparatus provided in this embodiment of this application may include: a transceiver unit, configured to receive identification information that is of a target detection part and that is sent by a signal detector; and a processing unit, configured to determine port information of a second end of a to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers; and match the port information of the second end of the to-be-sought optical fiber with pre-obtained port information of a first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds a specified threshold.

The transceiver unit and the processing unit are disposed in the processing apparatus, so that the port information of the first end and the port information of the second end of the to-be-sought optical fiber can be matched. Therefore, the processing apparatus provided in this embodiment of this application can quickly and accurately match the port information of two ends of an optical fiber.

In some embodiments of this application, the processing apparatus may further include a storage unit. The transceiver unit may be further configured to receive the port information of the first end of the to-be-sought optical fiber, and the processing unit may be further configured to store, into the storage unit, the port information that is of the first end of the to-be-sought optical fiber and that is received by the transceiver unit. The storage unit is disposed in the processing apparatus, so that the port information of the first end of the to-be-sought optical fiber can be stored. After determining the port information of the second end of the to-be-sought optical fiber, the processing unit may read the port information of the first end of the to-be-sought optical fiber that is stored in the storage unit, so as to facilitate matching of the port information of the two ends of the to-be-sought optical fiber.

Further, in this embodiment of this application, the transceiver unit may be further configured to send pairing information to an optical fiber management platform. The pairing information includes the port information of the first end and the port information of the second end of the to-be-sought optical fiber. The transceiver unit may send the matched pairing information of the optical fiber to the optical fiber management platform, and the optical fiber management platform may store pairing information of the plurality of optical fibers, thereby implementing digital management of the optical fibers.

According to a fourth aspect, an embodiment of this application further provides a fiber seeking method applied to the processing apparatus in the third aspect. The fiber seeking method applied to the processing apparatus in this embodiment of this application may include: receiving identification information that is of a target detection part and that is sent by a signal detector; determining port information of a second end of a to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers; and matching the port information of the second end of the to-be-sought optical fiber with pre-obtained port information of a first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds a specified threshold.

According to the fiber seeking method provided in this embodiment of this application, port information of two ends of an optical fiber may be quickly and accurately matched.

Further, the fiber seeking method applied to the processing apparatus in this embodiment of this application may further include: sending pairing information to an optical fiber management platform. The pairing information includes the port information of the first end and the port information of the second end of the to-be-sought optical fiber.

In this embodiment of this application, the processing apparatus may send the matched pairing information of the optical fiber to the optical fiber management platform, and the optical fiber management platform may store pairing information of the plurality of optical fibers, thereby implementing digital management of the optical fibers.

In a possible implementation, before matching the port information of the second end of the to-be-sought optical fiber with the pre-obtained port information of the first end of the to-be-sought optical fiber, the method may further include: receiving and storing the port information of the first end of the to-be-sought optical fiber. In this way, the port information of the first end of the to-be-sought optical fiber is known, facilitating matching with the subsequently determined port information of the second end of the to-be-sought optical fiber, so as to implement matching of the port information of the two ends of the to-be-sought optical fiber.

In a possible implementation, the port information of the first end of the to-be-sought optical fiber may be input into the processing apparatus. For example, when the processing apparatus is a mobile terminal like a mobile phone or a tablet computer, an input box may be displayed in the processing apparatus, and the port information of the first end of the to-be-sought optical fiber is input into the input box. Certainly, the port information of the first end of the to-be-sought optical fiber may alternatively be input into the processing apparatus in another manner. This is not limited herein. In another possible implementation, when the processing apparatus is a mobile terminal like a mobile phone or a tablet computer, port information of first ends of the plurality of optical fibers may be pre-stored in the processing apparatus, and a selection box may be displayed in the processing apparatus. Each option in the selection box corresponds to port information of a first end of one optical fiber. A user may select the port information of the first end of the to-be-sought optical fiber from the selection box displayed in the processing apparatus, and the processing apparatus stores the selected port information of the first end of the to-be-sought optical fiber. Then, the user applies the fiber seeking signal to a signal input area of the to-be-sought optical fiber based on the selected port information of the first end of the to-be-sought optical fiber.

According to a fifth aspect, an embodiment of this application further provides another fiber seeking system. The fiber seeking system provided in this embodiment of this application may include a processing apparatus and an optical fiber management platform. The optical fiber management platform is configured to receive and store pairing information sent by the processing apparatus. The pairing information includes port information of a first end and port information of a second end of a to-be-sought optical fiber. For implementations of the processing apparatus and the optical fiber management platform in the fiber seeking system in the fifth aspect, refer to the implementations of the processing apparatus and the optical fiber management platform in the fiber seeking system in the first aspect. Details are not repeated.

According to a sixth aspect, an embodiment of this application further provides another fiber seeking method. The fiber seeking method may be applied to the fiber seeking system in the fifth aspect. Another fiber seeking method provided in an embodiment of this application may include: A processing apparatus determines port information of a second end of a to-be-sought optical fiber based on received identification information of a target detection part and a preset correspondence, where the to-be-sought optical fiber is one of a plurality of optical fibers, and the correspondence is a one-to-one correspondence between the identification information of the plurality of detection parts and port information of second ends of the plurality of optical fibers; the processing apparatus matches the port information of the second end of the to-be-sought optical fiber with pre-obtained port information of a first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds a specified threshold; and the processing apparatus sends pairing information to an optical fiber management platform, where the pairing information includes the port information of the first end and the port information of the second end of the to-be-sought optical fiber; and the optical fiber management platform receives and stores the pairing information sent by the processing apparatus.

According to the fiber seeking method provided in this embodiment of this application, port information of two ends of an optical fiber may be quickly and accurately matched. In addition, the optical fiber management platform may implement digital management of pairing information of an optical fiber.

According to a seventh aspect, an embodiment of this application further provides another fiber seeking system. The another fiber seeking system provided in this embodiment of this application may include a fiber seeking apparatus, a processing apparatus, and an optical fiber management platform.

The fiber seeking system is configured to match port information of a first end with port information of a second end of an optical fiber. The fiber seeking apparatus may include a signal detector. The signal detector includes at least one detection part, a first processing module, and a communication module. Each detection part is configured to clamp a signal detection area of an optical fiber and is configured to detect optical signal strength in the signal detection area of the clamped optical fiber. Different detection parts are configured to clamp signal detection areas of different optical fibers and are configured to detect optical signal strength in the signal detection areas of the clamped different optical fibers. A signal detection area of any optical fiber is close to a second end of the optical fiber.

The first processing module is configured to compare a change amplitude of the optical signal strength detected by each detection part with a specified threshold, to determine a target detection part. The target detection part is a detection part in which the change amplitude of the optical signal strength of the signal detection area exceeds the specified threshold.

The communication module is configured to send identification information of the target detection part to the optical fiber management platform. The processing apparatus is configured to send port information of a first end of a to-be-sought optical fiber to the optical fiber management platform. The to-be-sought optical fiber is an optical fiber with a first end to which a fiber seeking signal is applied, and the fiber seeking signal is used to cause a strength change in an optical signal transmitted in the optical fiber, where a change amplitude exceeds the specified threshold. The optical fiber management platform is configured to: determine port information of a second end of the to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers; and match the port information of the second end of the to-be-sought optical fiber with the received port information of the first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds the specified threshold. In addition, the optical fiber management platform may further send matched pairing information of the optical fiber to the processing apparatus, where the pairing information includes the port information of the first end and the port information of the second end of the to-be-sought optical fiber, to facilitate presenting the pairing information of two ends of the optical fiber to a user.

A difference between the fiber seeking system in the seventh aspect and the fiber seeking system in the first aspect lies in that, in the fiber seeking system in the seventh aspect, the signal detector is configured to send the identification information of the target detection part to the optical fiber management platform, the processing apparatus is configured to send the port information of the first end of the to-be-sought optical fiber to the optical fiber management platform, and the optical fiber management platform performs data processing, determines the port information of the second end of the to-be-sought optical fiber, and matches the port information of the two ends of the to-be-sought optical fiber. Because the optical fiber management platform has a powerful processing function, in this embodiment of this application, a complex data processing process is performed in the optical fiber management platform, so that a data processing amount of the processing apparatus can be reduced, and data processing efficiency of the fiber seeking system can be improved.

For a specific implementation of the fiber seeking apparatus in the fiber seeking system in the seventh aspect, refer to the specific implementation of the fiber seeking apparatus in the fiber seeking system in the first aspect. Details are not repeated.

According to an eighth aspect, an embodiment of this application further provides another fiber seeking method. The fiber seeking method may be applied to the fiber seeking system in the seventh aspect. Another fiber seeking method provided in this embodiment of this application may include: A fiber seeking apparatus sends, to an optical fiber management platform, identification information of a target detection part in which a change amplitude of optical signal strength exceeds a specified threshold; a processing apparatus sends port information of a first end of a to-be-sought optical fiber to the optical fiber management platform, where the to-be-sought optical fiber is an optical fiber with a first end to which a fiber seeking signal is applied, and the fiber seeking signal is used to cause a strength change in an optical signal transmitted in an optical fiber, where the change amplitude exceeds the specified threshold; the optical fiber management platform determines port information of a second end of the to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers; and the optical fiber management platform matches the port information of the second end of the to-be-sought optical fiber with the received port information of the first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds the specified threshold.

In addition, the fiber seeking method may further include: The optical fiber management platform sends pairing information to the processing apparatus. The pairing information includes the port information of the first end and the port information of the second end of the to-be-sought optical fiber.

According to the fiber seeking method provided in this embodiment of this application, port information of two ends of an optical fiber can be quickly and accurately matched, and digital management of pairing information of the optical fiber can be implemented.

### BRIEF DESCRIPTION OF DRAWINGS

FIG. 1 is a diagram of a structure of a fiber seeking system according to an embodiment of this application;
FIG. 2 is a diagram of a fiber seeking process of a fiber seeking system according to an embodiment of this application;
FIG. 3 is an interaction diagram of a fiber seeking method according to an embodiment of this application;
FIG. 4 is another interaction diagram of a fiber seeking method according to an embodiment of this application;
FIG. 5 is a diagram of a structure of a processing apparatus according to an embodiment of this application;
FIG. 6 is a flowchart of a fiber seeking method according to an embodiment of this application;
FIG. 7 is a diagram of a structure of a signal generator according to an embodiment of this application;
FIG. 8 is a diagram of a structure of a signal detector according to an embodiment of this application;
FIG. 9 is a diagram of another structure of a signal detector according to an embodiment of this application;
FIG. 10 is a diagram of another structure of a signal detector according to an embodiment of this application;
FIG. 11 is a diagram of another structure of a signal detector according to an embodiment of this application;
FIG. 12 is a diagram of a structure of another fiber seeking system according to an embodiment of this application;
FIG. 13 is an interaction diagram of another fiber seeking method according to an embodiment of this application;
FIG. 14 is a diagram of a structure of another fiber seeking system according to an embodiment of this application; and
FIG. 15 is an interaction diagram of another fiber seeking method according to an embodiment of this application.

### Reference numerals:

11: fiber seeking apparatus; 101: signal detector; 1011m: detection part group; 1011: detection part; 1012: first processing module; 1013: communication module; 1014: second processing module; 102: signal generator; 1021: first clamping member; 1022: signal source; 12: processing apparatus; 121: transceiver unit; 122: processing unit; 123: storage unit; 13: optical fiber management platform; 200: optical fiber; A: first end; Z: second end; 201: signal detection area; 202: signal input area; U1 and U2: slot; Q1 and Q2: sliding cover; P: second clamping member.

### DESCRIPTION OF EMBODIMENTS

In a related technology, to match port information of two ends of an optical fiber, one end of the optical fiber needs to be manually removed, for injecting red light into an end surface of the optical fiber as a detection signal, and a red light receiver is disposed on the end surface of the other end of the optical fiber. When the red light receiver senses the detection signal, the port information of the two ends of the optical fiber may be matched. In a fiber seeking method in the related technology, a live network service needs to be interrupted. In addition, a short transmission distance of the red light leads to a short fiber seeking distance of the optical fiber (generally within 2 km). However, a distance between base stations is generally greater than 5 km. Therefore, it is difficult to implement cross-site detection in the fiber seeking method in the related technology.

Based on this, embodiments of this application provide a fiber seeking apparatus, a processing apparatus, a fiber seeking system, and a fiber seeking method. The solution provided in embodiments of this application may be applied to an optical communication network. Fiber seeking is performed on an optical fiber by using the solution provided in embodiments of this application, so that port information of two ends of the optical fiber can be quickly and accurately matched, and a live network service does not need to be interrupted. In addition, a fiber seeking distance of the optical fiber is long, and generally may reach 20 km, or even range from 40 km to 80 km, so that cross-site detection of the optical fiber can be implemented.

To make the objectives, technical solutions, and advantages of this application clearer, the following further describes this application in detail with reference to the accompanying drawings.

It should be noted that same reference numerals in the accompanying drawings of this application denote same or similar structures. Therefore, repeated descriptions thereof are omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

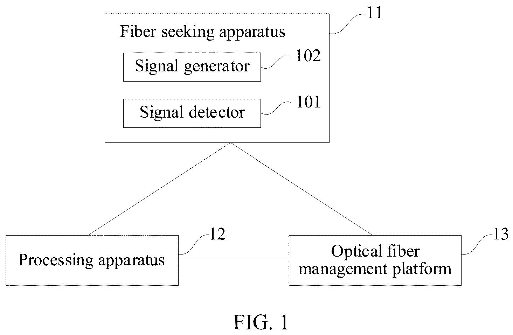

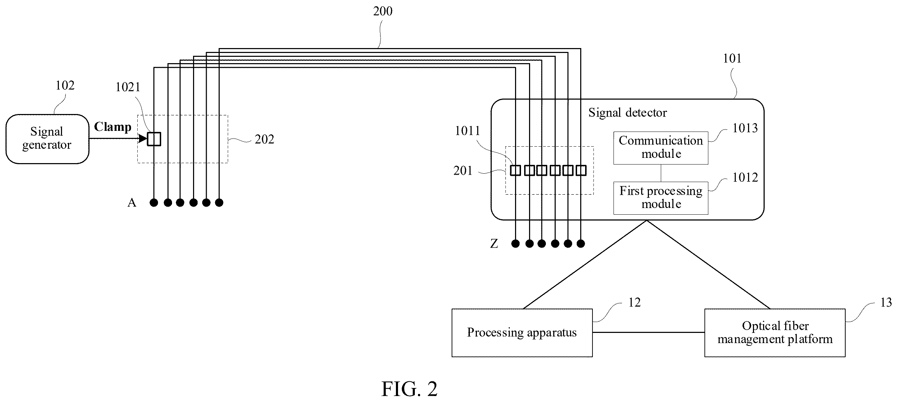

FIG. 1 is a diagram of a structure of a fiber seeking system according to an embodiment of this application. FIG. 2 is a diagram of a fiber seeking process of a fiber seeking system according to an embodiment of this application. With reference to FIG. 1 and FIG. 2, in some embodiments of this application, the fiber seeking system may include a fiber seeking apparatus 11 and a processing apparatus 12. The fiber seeking system may be configured to match port information of a first end A with port information of a second end Z of an optical fiber 200. During specific implementation, according to a flow direction of light in the optical fiber 200, an upstream end of the optical fiber 200 may be the first end A, and a downstream end of the optical fiber 200 may be the second end Z. In this embodiment of this application, an example in which the upstream end of the optical fiber 200 is the first end A, and the downstream end of the optical fiber 200 is the second end Z is used for description. In some cases, the upstream end of the optical fiber 200 may alternatively be the second end Z, and the downstream end of the optical fiber 200 may alternatively be the first end A. This is not limited herein. The port information of the first end A may be information about the first end A, or may be information about a device connected to the first end A. The port information of the second end Z may be information about the second end Z, or may be information about a device connected to the second end Z.

The fiber seeking apparatus 11 may include a signal detector 101. The signal detector 101 may include at least one detection part 1011, a first processing module 1012, and a communication module 1013. Each detection part 1011 may be configured to clamp a signal detection area 201 of an optical fiber 200 and may be configured to detect optical signal strength in the signal detection area 201 of the clamped optical fiber 200. Different detection parts 1011 are configured to clamp signal detection areas 201 of different optical fibers 200 and are configured to detect optical signal strength in the signal detection areas 201 of the clamped different optical fibers 200. A signal detection area 201 of any optical fiber 200 is close to a second end Z of the optical fiber 200. The first processing module 1012 is configured to compare a change amplitude of the optical signal strength detected by each detection part 1011 with a specified threshold, to determine a target detection part. The target detection part is a detection part 1011 in which the change amplitude of the optical signal strength of the signal detection area exceeds the specified threshold. The communication module 1013 is configured to send identification information of the target detection part to the processing apparatus 12.

The processing apparatus 12 is configured to: receive the identification information that is of the target detection part and that is sent by the signal detector 101; determine port information of a second end Z of a to-be-sought optical fiber based on the received identification information of the target detection part and a preset correspondence, where the to-be-sought optical fiber is one of a plurality of optical fibers 200, and the correspondence is a one-to-one correspondence between identification information of a plurality of detection parts 1011 and port information of second ends Z of the plurality of optical fibers 200; and match the port information of the second end Z of the to-be-sought optical fiber with pre-obtained port information of a first end A of the to-be-sought optical fiber, where the to-be-sought optical fiber is an optical fiber 200 with a first end A to which a fiber seeking signal is applied, and the fiber seeking signal is used to cause a strength change in an optical signal transmitted in the to-be-sought optical fiber, where a change amplitude exceeds a specified threshold.

In this embodiment of this application, there may be one or more signal detectors 101 in the fiber seeking apparatus 11, and there may be one or more detection parts 1011 in the signal detector 101. During specific implementation, quantities of signal detectors 101 and detection parts 1011 may be set according to an actual requirement, and this is not limited herein.

Still refer to FIG. 2. The following describes a process of performing fiber seeking by using the fiber seeking system in this embodiment of this application. When fiber seeking is performed on a plurality of optical fibers 200 (where six optical fibers 200 are used as an example in FIG. 2), a signal detector 101 may be installed at a second end Z of each optical fiber 200. Specifically, a signal detection area 201 of each optical fiber 200 may be clamped by a detection part 1011. Optionally, there may be one or more signal detectors 101, and one or more detection parts 1011 may be disposed for each signal detector 101. Identification information of each detection part 1011 is bound with port information of the second end Z of each corresponding clamped optical fiber 200, and a correspondence between the identification information of the detection part 1011 and the port information of the second end Z of the optical fiber 200 is pre-stored in the processing apparatus 12.

Then, one optical fiber 200 is selected from the plurality of optical fibers 200 to be used as a to-be-sought optical fiber, and port information of a first end A of the to-be-sought optical fiber is stored in the processing apparatus 12. A fiber seeking signal is applied to a signal input area 202 of the to-be-sought optical fiber, where the signal input area 202 is an area close to the first end A of the to-be-sought optical fiber. Because the fiber seeking signal may cause a strength change in an optical signal transmitted in the optical fiber 200, the detection part 1011 may detect optical signal strength of the clamped optical fiber 200 in the signal detection area 201. When the optical signal strength detected by the detection part 1011 is greater than the specified threshold, it indicates that a change amplitude of the optical signal strength of the optical fiber 200 clamped by the detection part 1011 is large, that is, the optical fiber 200 clamped by the detection part 1011 is the to-be-sought optical fiber. Optical signal strength detected by each detection part 1011 may be monitored by using the signal detector 101, and when a change amplitude of the optical signal strength detected by the detection part 1011 exceeds the specified threshold, identification information of the detection part 1011 is sent to the processing apparatus 12.

Then, the processing apparatus 12 may determine port information of a second end Z of the to-be-sought optical fiber based on the received identification information of the detection part 1011 and a preset correspondence (a one-to-one correspondence between identification information of a plurality of detection parts 1011 and port information of second ends Z of the plurality of optical fibers 200), and match the port information of the second end Z of the to-be-sought optical fiber with the pre-obtained port information of the first end A of the to-be-sought optical fiber.

Then, another optical fiber 200 is selected from the plurality of optical fibers 200 to be used as the to-be-sought optical fiber, and the port information of the first end A and the port information of the second end Z of the to-be-sought optical fiber are matched in the foregoing manner. In this way, port information of two ends of the plurality of optical fibers 200 is matched one by one.

Based on the foregoing analysis, in the fiber seeking system provided in this embodiment of this application, the signal detector 101 is disposed in the fiber seeking apparatus 11, and the signal detector 101 includes at least one detection part 1011. In the fiber seeking process, the detection part 1011 in the signal detector 101 may clamp the signal detection area 201 of the optical fiber 200, and the fiber seeking signal is adapted to the signal input area 202 of the to-be-sought optical fiber. When the change amplitude of the optical signal strength of the detection part 1011 exceeds the specified threshold, the signal detector 101 may send the identification information of the detection part 1011 to the processing apparatus 12, and the processing apparatus 12 performs data processing, so that the port information of the first end A of the to-be-sought optical fiber can be matched with the port information of the second end Z. In this way, port information of two ends of the optical fiber 200 can be quickly and accurately matched, and the optical fiber 200 does not need to be removed. Therefore, a connection relationship between the optical fiber 200 and another device is not affected, and a live network service does not need to be interrupted.

In addition, the fiber seeking signal may cause the strength change in the optical signal transmitted in the optical fiber 200. In this way, the detection part 1011 detects the optical signal strength in the signal detection area 201 of the optical fiber 200, and determines whether the change amplitude of the optical signal strength exceeds the specified threshold, so that the port information of the second end Z of the to-be-sought optical fiber can be determined, thereby implementing matching between the port information of the first end A of the optical fiber 200 and the port information of the second end Z. In the fiber seeking process, fiber seeking is performed based on the strength change of the optical signal transmitted in the optical fiber 200. A transmission distance of service light transmitted in the optical fiber 200 is long, and generally ranges from 40 km to 80 km. Therefore, a fiber seeking distance is basically consistent with the transmission distance of the service light. In this embodiment of this application, the fiber seeking distance is long, and may generally reach 20 km, or even range from 40 km to 80 km, so that cross-site detection of the optical fiber can be implemented.

In some embodiments of this application, when service light is transmitted in an optical fiber, fiber seeking may be performed based on a strength change of an optical signal transmitted in the optical fiber 200. Specifically, a specified degree of macrobending on a to-be-sought optical fiber may be controlled in the signal input area 202. For example, a radius of the macrobending may be about 5.9 mm, leading to generation of leakage light of the to-be-sought optical fiber in the signal input area 202, so that strength of an optical signal transmitted in the to-be-sought optical fiber is attenuated to some extent (that is, a strength change in the optical signal transmitted in the to-be-sought optical fiber is caused), and the fiber seeking signal is applied to the signal input area 202. The detection part 1011 clamps the signal detection area 201 of the optical fiber 200, to cause a specified degree of macrobending on the optical fiber 200 in the signal detection area 201. For example, a radius of the macrobending may be about 5.9 mm, leading to generation of leakage light of the optical fiber in the signal detection area 201. If the specified degree of macrobending is applied to the optical fiber 200 in the signal input area 202, the strength of the optical signal transmitted in the optical fiber 200 decreases, and intensity of the leakage light of the optical fiber 200 in the signal detection area 201 also decreases accordingly. Therefore, whether the optical fiber 200 is the to-be-sought optical fiber can be determined by detecting the intensity of the leakage light of the optical fiber 200 in the signal detection area 201 (that is, detecting the optical signal strength of the signal detection area 201 of the optical fiber 200), and determining whether a change amplitude of the intensity of the leakage light exceeds the specified threshold.

In the fiber seeking process, the fiber seeking signal may cause the optical signal transmitted in the optical fiber 200 to be changed by about 1 dB. To be specific, the fiber seeking process has little impact on the optical signal in the to-be-sought optical fiber, and the fiber seeking process does not affect the live network service.

During specific implementation, the fiber seeking signal may be applied to the signal input area 202 of the to-be-sought optical fiber in a plurality of manners. The following describes several manners by using examples.

### Manner 1:

Still refer to FIG. 1 and FIG. 2. The fiber seeking apparatus 11 may further include a signal generator 102. The signal generator 102 is configured to clamp a signal input area 202 of any optical fiber 200 (for example, in FIG. 2, the clamped optical fiber 200 on the leftmost side) and is configured to apply a fiber seeking signal to the signal input area 202 of the clamped optical fiber 200. The fiber seeking signal is used to cause a strength change in an optical signal transmitted in the optical fiber 200, and the signal input area 202 is close to a first end A of the optical fiber 200. In this embodiment of this application, there may be one or more signal generators 102 in the fiber seeking apparatus 11.

In the fiber seeking process, the signal generator 102 may clamp the signal input area 202 of the to-be-sought optical fiber, to cause a specified degree of macrobending on the to-be-sought optical fiber in the signal input area 202, leading to generation of leakage light of the to-be-sought optical fiber in the signal input area 202, so that strength of an optical signal transmitted in the to-be-sought optical fiber is attenuated, and the fiber seeking signal is applied to the signal input area 202.

### Manner 2:

A manner of manually bending the signal input area 202 of the to-be-sought optical fiber may be used, to cause a specified degree of macrobending on the to-be-sought optical fiber in the signal input area 202, leading to generation of leakage light of the to-be-sought optical fiber in the signal input area 202, so that strength of an optical signal transmitted in the to-be-sought optical fiber is attenuated, and the fiber seeking signal is applied to the signal input area 202.

In some other embodiments of this application, when no service light is transmitted in the to-be-sought optical fiber, the fiber seeking signal may be injected into the first end A of the to-be-sought optical fiber. For example, analog service light or an optical signal (for example, red light) of another band may be injected into the first end A of the to-be-sought optical fiber, so that strength of an optical signal transmitted in the to-be-sought optical fiber increases. The detection part 1011 clamps the signal detection area 201 of the optical fiber 200, to cause a specified degree of macrobending on the optical fiber 200 in the signal detection area 201. For example, a radius of the macrobending may be about 5.9 mm, leading to generation of leakage light of the optical fiber in the signal detection area 201. If the fiber seeking signal is injected into the first end A of the optical fiber 200, the strength of the optical signal transmitted in the optical fiber 200 increases, and intensity of the leakage light of the optical fiber 200 in the signal detection area 201 also increases accordingly. Therefore, whether the optical fiber 200 is the to-be-sought optical fiber can be determined by detecting the intensity of the leakage light of the optical fiber 200 in the signal detection area 201 (that is, detecting the optical signal strength of the signal detection area 201 of the optical fiber 200), and determining whether an intensity change of the leakage light exceeds the specified threshold.

During specific implementation, to prevent a misoperation of the fiber seeking apparatus caused by a strength change of an optical signal generated during normal service interaction or manual sorting of optical fibers, the specified threshold may be set to be greater than a value of the strength change of the optical signal generated during normal service interaction or manual sorting of optical fibers. For example, the specified threshold may be set to be greater than 0.2 dB, for example, may be set to 0.5 dB, 0.6 dB, 1 dB, or another value. Certainly, a value of the specified threshold cannot be excessively large, to prevent a case in which the to-be-sought optical fiber cannot be determined because the specified threshold is excessively large. A specific value of the specified threshold may be set according to an actual application scenario, and this is not limited herein.

Further, in some embodiments of this application, as shown in FIG. 1 and FIG. 2, the fiber seeking system may further include an optical fiber management platform 13. The optical fiber management platform 13 is configured to receive and store pairing information sent by the processing apparatus 12. The pairing information includes the port information of the first end A and the port information of the second end Z of the to-be-sought optical fiber 200. During specific implementation, after matching the port information of the second end Z of the to-be-sought optical fiber with the port information of the first end A, the processing apparatus 12 may send the matched pairing information of the optical fiber 200 to the optical fiber management platform 13, and the optical fiber management platform 13 may store pairing information of the plurality of optical fibers 200, thereby implementing digital management of the optical fibers 200.

In a possible implementation, the signal detector 101 may directly communicate with the processing apparatus 12, that is, the signal detector 101 may directly send the identification information of the target detection part 1011 to the processing apparatus 12.

In another possible implementation, the signal detector 101 may indirectly communicate with the processing apparatus 12. Specifically, the signal detector 101 may be configured to send, to the optical fiber management platform 13, identification information of the target detection part 1011 in which a change amplitude of optical signal strength exceeds the specified threshold. The optical fiber management platform 13 may be further configured to receive the identification information of the target detection part 1011, and send the received identification information of the target detection part 1011 to the processing apparatus 12. In other words, the optical fiber management platform 13 may also play an information transmission role. The signal detector 101 may send the identification information of the target detection part 1011 to the processing apparatus 12 through the optical fiber management platform 13, so that the processing apparatus 12 determines the port information of the second end Z of the to-be-sought optical fiber based on the received identification information of the target detection part 1011 and the preset correspondence, matches the port information of the second end Z of the to-be-sought optical fiber with the pre-obtained port information of the first end A of the to-be-sought optical fiber, and sends the matched pairing information to the optical fiber management platform 13.

In actual application, the processing apparatus 12 may be a mobile terminal having a processing function, like a mobile phone or a tablet, or the processing apparatus 12 may be a component having a processing function, like a chip or a circuit board, or the processing apparatus 12 may be a device having a processing function, like a computer or a server. This is not limited herein. The optical fiber management platform 13 may be a device with a powerful processing function, like a computer or a server.

With reference to FIG. 1 and FIG. 2, the foregoing describes a basic structure of the fiber seeking system in some embodiments of this application. With reference to the accompanying drawings, the following describes in detail a fiber seeking method applied to the foregoing fiber seeking system.

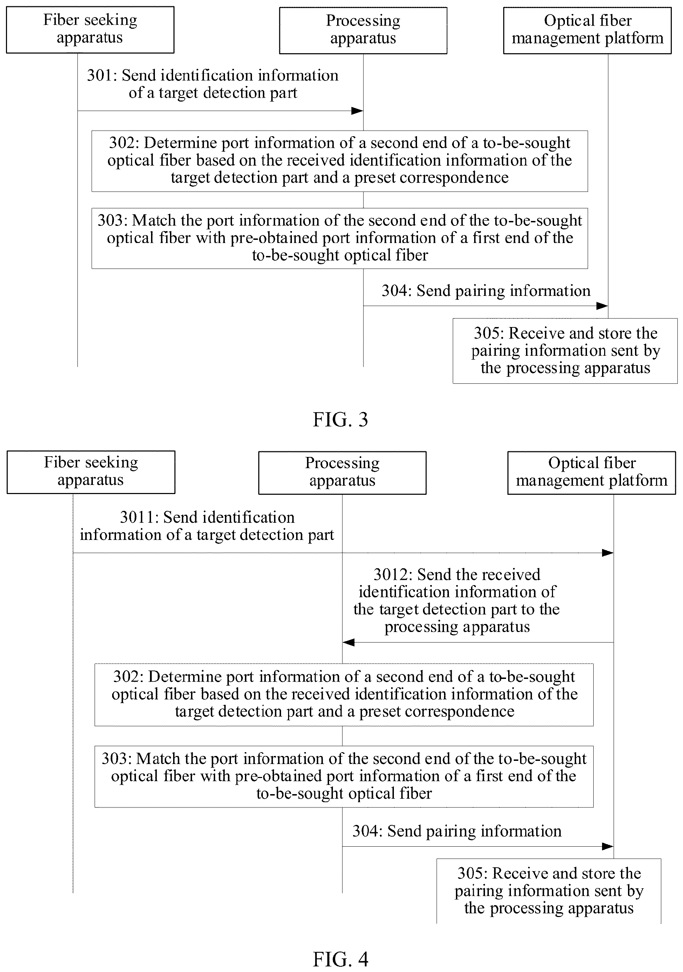

FIG. 3 is an interaction diagram of a fiber seeking method according to an embodiment of this application. As shown in FIG. 3, the fiber seeking method applied to a fiber seeking system according to this embodiment of this application may include the following steps.

S301: A fiber seeking apparatus sends, to a processing apparatus, identification information of a target detection part in which a change amplitude of optical signal strength exceeds a specified threshold. Step S301 is performed in a signal detector of the fiber seeking apparatus, that is, specifically, the signal detector sends the identification information of the detection part to the processing apparatus.

S302: The processing apparatus determines port information of a second end of a to-be-sought optical fiber based on the received identification information of the target detection part and a preset correspondence. The to-be-sought optical fiber is one of a plurality of optical fibers, and the correspondence is a one-to-one correspondence between identification information of a plurality of detection parts and port information of second ends of the plurality of optical fibers.

S303: The processing apparatus matches the port information of the second end of the to-be-sought optical fiber with pre-obtained port information of a first end of the to-be-sought optical fiber. The to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds the specified threshold.

In addition, refer to FIG. 2. When fiber seeking is performed on the plurality of optical fibers 200, the signal detector 101 may be installed at the second end Z of each optical fiber 200. Specifically, the signal detection area 201 of each optical fiber 200 may be clamped by a detection part 1011, and the correspondence between the identification information of the plurality of detection parts 1011 and the port information of the second ends Z of the plurality of optical fibers 200 is pre-stored in the processing apparatus 12. Then, one optical fiber 200 is selected from the plurality of optical fibers 200 to be used as the to-be-sought optical fiber, the port information of the first end A of the to-be-sought optical fiber is stored in the processing apparatus 12, and the fiber seeking signal is applied to the signal input area 202 of the to-be-sought optical fiber. The signal detector 101 may perform step S301, and the processing apparatus 12 may perform steps S302 and S303. Therefore, according to the fiber seeking method provided in this embodiment of this application, port information of two ends of an optical fiber may be quickly and accurately matched. In addition, fiber seeking is performed based on a strength change of an optical signal transmitted in an optical fiber, and a fiber seeking distance is long, and generally may reach 20 km, or even may range from 40 km to 80 km, so that cross-site detection of the optical fiber can be implemented.

Further, still refer to FIG. 3. The fiber seeking method in this embodiment of this application may further include the following steps.

S304: The processing apparatus sends pairing information to an optical fiber management platform. The pairing information includes the port information of the first end and the port information of the second end of the to-be-sought optical fiber.

S305: The optical fiber management platform receives and stores the pairing information sent by the processing apparatus.

In this embodiment of this application, the processing apparatus may send the matched pairing information of the optical fiber to the optical fiber management platform, and the optical fiber management platform may store pairing information of the plurality of optical fibers, thereby implementing digital management of the optical fibers.

In a possible implementation, as shown in FIG. 3, the fiber seeking apparatus may directly communicate with the processing apparatus, that is, the fiber seeking apparatus may directly send the identification information of the target detection part to the processing apparatus.

FIG. 4 is another interaction diagram of a fiber seeking method according to an embodiment of this application. As shown in FIG. 4, in another possible implementation, a fiber seeking apparatus may indirectly communicate with a processing apparatus. The foregoing step S301 may specifically include:

S3011: The fiber seeking apparatus sends the identification information of the target detection part to an optical fiber management platform.

S3012: The optical fiber management platform receives the identification information of the target detection part, and sends the received identification information of the target detection part to the processing apparatus.

In other words, the optical fiber management platform may also play an information transmission role. The fiber seeking apparatus may send identification information of the target detection part to the processing apparatus through the optical fiber management platform, so that the processing apparatus determines the port information of the second end of the to-be-sought optical fiber based on the received identification information of the target detection part and the preset correspondence, matches the port information of the second end of the to-be-sought optical fiber with the pre-obtained port information of the first end of the to-be-sought optical fiber, and sends the matched pairing information to the optical fiber management platform.

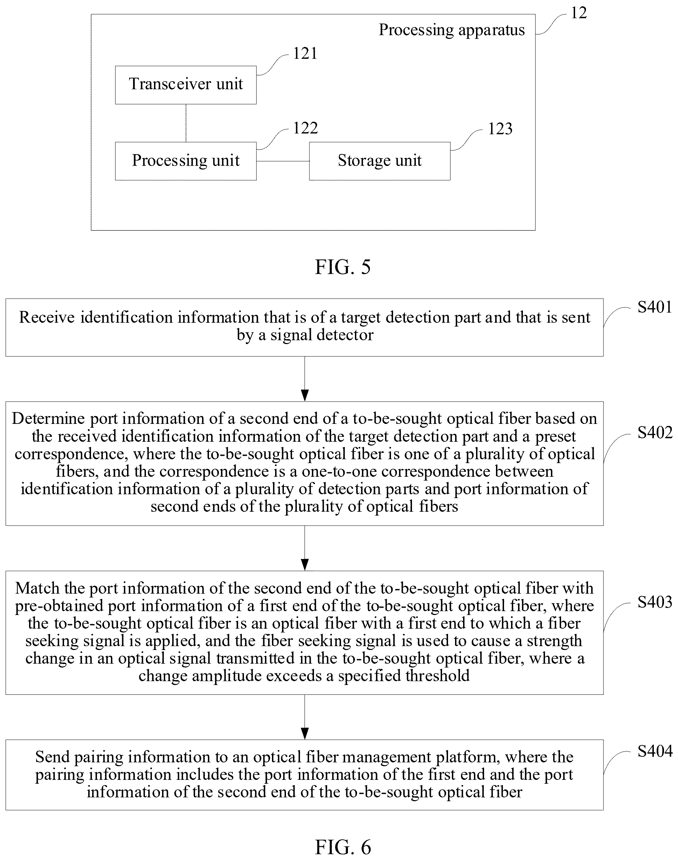

Based on a same technical concept, an embodiment of this application further provides a processing apparatus. FIG. 5 is a diagram of a structure of a processing apparatus according to an embodiment of this application. As shown in FIG. 5, the processing apparatus 12 provided in this embodiment of this application may include:
a transceiver unit 121, configured to receive identification information that is of a target detection part and that is sent by a signal detector; and
a processing unit 122, configured to: determine port information of a second end of a to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers; and match the port information of the second end of the to-be-sought optical fiber with pre-obtained port information of a first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds a specified threshold.

In addition, refer to FIG. 2. When fiber seeking is performed on the plurality of optical fibers 200, the signal detector 101 may be installed at the second end Z of each optical fiber 200. Specifically, the signal detection area 201 of each optical fiber 200 may be clamped by a detection part 1011, and the correspondence between the identification information of the plurality of detection parts 1011 and the port information of the second ends Z of the plurality of optical fibers 200 is pre-stored in the processing apparatus 12. Then, one optical fiber 200 is selected from the plurality of optical fibers 200 to be used as the to-be-sought optical fiber, the port information of the first end A of the to-be-sought optical fiber is stored in the processing apparatus 12, and the fiber seeking signal is applied to the signal input area 202 of the to-be-sought optical fiber. The signal detector 101 may compare the change amplitude of the optical signal strength detected by each detection part 1011 with the specified threshold, and send, to the processing apparatus 12, the identification information of the target detection part in which the change amplitude of the optical signal strength exceeds the specified threshold. The transceiver unit 121 and the processing unit 122 are disposed in the processing apparatus 12, so that the port information of the first end A and the port information of the second end Z of the to-be-sought optical fiber can be matched. Therefore, the processing apparatus 12 provided in this embodiment of this application can quickly and accurately match the port information of two ends of an optical fiber.

In some embodiments of this application, the processing apparatus 12 may further include a storage unit 123. The transceiver unit 121 may be further configured to receive the port information of the first end of the to-be-sought optical fiber, and the processing unit 122 may be further configured to store, into the storage unit 123, the port information that is of the first end of the to-be-sought optical fiber and that is received by the transceiver unit 121. The storage unit 123 is disposed in the processing apparatus 12, so that the port information of the first end of the to-be-sought optical fiber can be stored. After determining the port information of the second end of the to-be-sought optical fiber, the processing unit 122 may read the port information of the first end of the to-be-sought optical fiber that is stored in the storage unit 123, so as to facilitate matching of the port information of the two ends of the to-be-sought optical fiber.

Further, in this embodiment of this application, the transceiver unit 121 may be further configured to send pairing information to an optical fiber management platform 13. The pairing information includes the port information of the first end and the port information of the second end of the to-be-sought optical fiber. The transceiver unit 121 may send the matched pairing information of the optical fiber to the optical fiber management platform, and the optical fiber management platform may store pairing information of the plurality of optical fibers, thereby implementing digital management of the optical fibers.

Based on a same technical concept, an embodiment of this application further provides a fiber seeking method applied to the foregoing processing apparatus. FIG. 6 is a flowchart of a fiber seeking method according to an embodiment of this application. As shown in FIG. 6, the fiber seeking method applied to the foregoing processing apparatus in this embodiment of this application may include the following steps.

S401: Receive identification information that is of a target detection part and that is sent by a signal detector.

S402: Determine port information of a second end of a to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers.

S403: Match the port information of the second end of the to-be-sought optical fiber with pre-obtained port information of a first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds a specified threshold.

In addition, refer to FIG. 2. When fiber seeking is performed on the plurality of optical fibers 200, the signal detector 101 may be installed at the second end Z of each optical fiber 200. Specifically, the signal detection area 201 of each optical fiber 200 may be clamped by a detection part 1011, and the correspondence between the identification information of the plurality of detection parts 1011 and the port information of the second ends Z of the plurality of optical fibers 200 is pre-stored in the processing apparatus 12. Then, one optical fiber 200 is selected from the plurality of optical fibers 200 to be used as the to-be-sought optical fiber, the port information of the first end A of the to-be-sought optical fiber is stored in the processing apparatus 12, and the fiber seeking signal is applied to the signal input area 202 of the to-be-sought optical fiber. The signal detector 101 may compare the change amplitude of the optical signal strength detected by each detection part 1011 with the specified threshold, and send, to the processing apparatus 12, the identification information of the target detection part in which the change amplitude of the optical signal strength exceeds the specified threshold. The processing apparatus 12 may perform the foregoing steps S401, S402, and S403. Therefore, according to the fiber seeking method provided in this embodiment of this application, port information of two ends of an optical fiber may be quickly and accurately matched.

Further, still refer to FIG. 6. The fiber seeking method applied to the foregoing processing apparatus in this embodiment of this application may further include the following step.

S404: Send pairing information to an optical fiber management platform, where the pairing information includes the port information of the first end and the port information of the second end of the to-be-sought optical fiber.

In this embodiment of this application, the processing apparatus may send the matched pairing information of the optical fiber to the optical fiber management platform, and the optical fiber management platform may store pairing information of the plurality of optical fibers, thereby implementing digital management of the optical fibers.

In a possible implementation, before matching the port information of the second end of the to-be-sought optical fiber with the pre-obtained port information of the first end of the to-be-sought optical fiber, the method may further include:
receiving and storing the port information of the first end of the to-be-sought optical fiber. In this way, the port information of the first end of the to-be-sought optical fiber is known, facilitating matching with the subsequently determined port information of the second end of the to-be-sought optical fiber, so as to implement matching of the port information of the two ends of the to-be-sought optical fiber.

In a possible implementation, the port information of the first end of the to-be-sought optical fiber may be input into the processing apparatus. For example, when the processing apparatus is a mobile terminal like a mobile phone or a tablet computer, an input box may be displayed in the processing apparatus, and the port information of the first end of the to-be-sought optical fiber is input into the input box. Certainly, the port information of the first end of the to-be-sought optical fiber may alternatively be input into the processing apparatus in another manner. This is not limited herein. In another possible implementation, when the processing apparatus is a mobile terminal like a mobile phone or a tablet computer, port information of first ends of the plurality of optical fibers may be pre-stored in the processing apparatus, and a selection box may be displayed in the processing apparatus. Each option in the selection box corresponds to port information of a first end of one optical fiber. A user may select the port information of the first end of the to-be-sought optical fiber from the selection box displayed in the processing apparatus, and the processing apparatus stores the selected port information of the first end of the to-be-sought optical fiber. Then, the user applies the fiber seeking signal to a signal input area of the to-be-sought optical fiber based on the selected port information of the first end of the to-be-sought optical fiber. The following describes in detail a specific structure of the fiber seeking apparatus in this embodiment of this application with reference to the accompanying drawings.

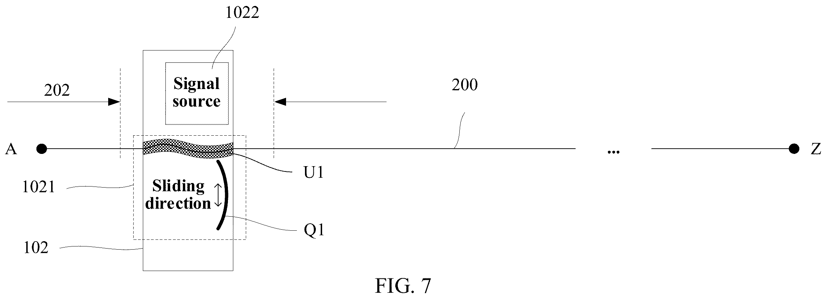

FIG. 7 is a diagram of a structure of a signal generator according to an embodiment of this application. As shown in FIG. 7, the signal generator 102 may include a first clamping member 1021. The first clamping member 1021 is configured to clamp a signal input area 202 of any optical fiber 200, to cause a specified degree of macrobending on the clamped optical fiber 200, leading to generation of leakage light of the optical fiber 200 in the signal input area 202, so as to apply the fiber seeking signal to the signal input area 202.

In the fiber seeking process, the first clamping member 1021 of the signal generator 102 may clamp a signal input area 202 of a to-be-sought optical fiber, to cause the specified degree of macrobending on the to-be-sought optical fiber in the signal input area 202. For example, a radius of the macrobending may be about 5.9 mm, leading to generation of leakage light of the to-be-sought optical fiber in the signal input area 202, so that strength of an optical signal transmitted in the to-be-sought optical fiber is attenuated, and the fiber seeking signal is applied to the signal input area 202 of the to-be-sought optical fiber.

In a possible implementation, the first clamping member 1021 may include a slot U1 and a sliding cover Q1. The signal input area 202 of the optical fiber 200 may be placed in the slot U1, and then the sliding cover Q1 is controlled to cooperate with the slot U1, to cause the specified degree of macrobending on the optical fiber 200. During specific implementation, a sliding rail may be disposed in the signal generator 102, the sliding cover Q1 may slide along the sliding rail, and the sliding cover Q1 is pushed to slide to cooperate with the slot U1, to cause macrobending on the optical fiber 200. Alternatively, a button for controlling slide of the sliding cover Q1 may be disposed in the signal generator 102, and the button is used to control the sliding cover Q1 to cooperate with the slot U1, to cause macrobending on the optical fiber 200. Alternatively, a bolt for driving the sliding cover Q1 to move may be disposed in the signal generator 102, and the sliding cover Q1 is driven to move by screwing the bolt, so as to cooperate with the slot U1 to cause macrobending on the optical fiber 200. Certainly, other manners may alternatively be used to control the slide of the sliding cover Q1. Details are not described herein one by one. In a possible implementation, the sliding cover Q1 may be arc-shaped, and the sliding cover Q1 may move in a sliding direction shown by an arrow in the figure by pressing the sliding cover Q1. During specific implementation, the signal input area 202 of the optical fiber 200 may be placed in the slot U1, and then the sliding cover Q1 is pressed, so that one end of the sliding cover Q1 moves to a position of the slot U1. The sliding cover Q1 and the slot U1 cooperate with each other to cause the specified degree of macrobending on the optical fiber 200. In FIG. 7, an example in which the slot U1 is in a curve shape is used for illustration. During specific implementation, the shape of the slot U1 may alternatively be in a straight line shape, or the shape of the slot U1 may alternatively be in another curve shape. This is not limited herein.

In another possible implementation, the first clamping member may alternatively be a fixture. In the fiber seeking process, the fixture may be opened for placing the to-be-sought optical fiber inside the fixture, and the fixture is closed to cause the specified degree of macrobending on the optical fiber. Certainly, the first clamping member in this embodiment of this application may alternatively be implemented in another manner. Details are not described herein one by one.

Further, still refer to FIG. 7. The signal generator 102 may further include a signal source 1022 configured to provide a fiber seeking signal. The signal source 1022 may be configured to: when no service light is transmitted in the any optical fiber, inject the fiber seeking signal into the first end A of the optical fiber, to apply the fiber seeking signal to the to-be-sought optical fiber. Specifically, the signal source 1022 may generate analog service light or an optical signal (for example, red light) of another band as the fiber seeking signal. The fiber seeking signal is injected into the first end A of the to-be-sought optical fiber, so that strength of the optical signal transmitted in the to-be-sought optical fiber can be increased. Therefore, the signal detector 101 detects the optical signal strength of the optical fiber 200 in the signal detection area 201, and determines whether the change amplitude of the optical signal strength exceeds a specified threshold, to determine whether the optical fiber 200 is the to-be-sought optical fiber, so as to match port information of two ends of the to-be-sought optical fiber.

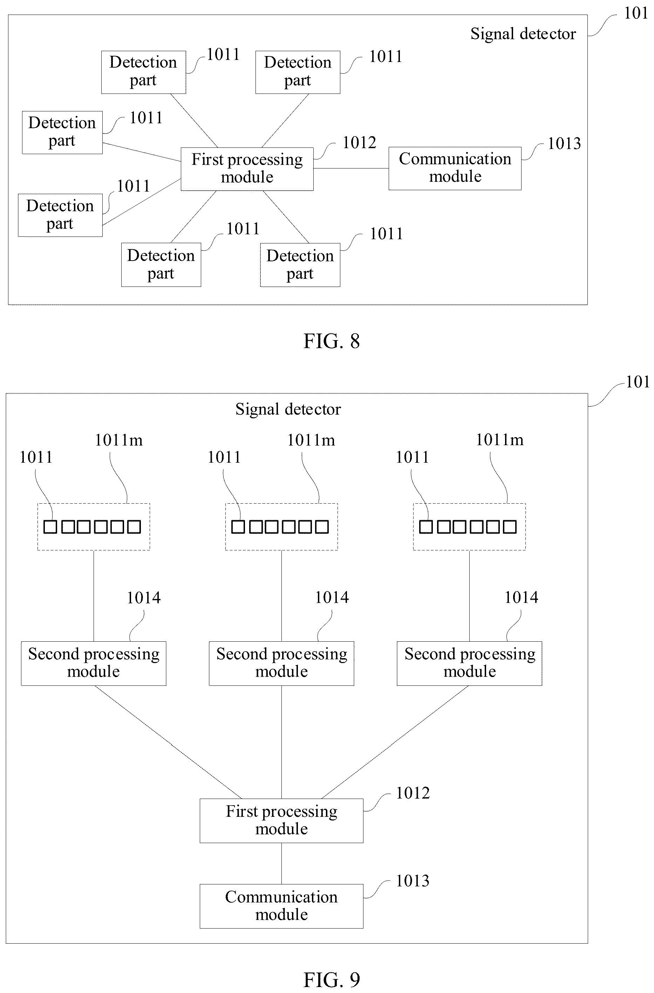

FIG. 8 is a diagram of a structure of a signal detector according to an embodiment of this application. As shown in FIG. 8, the signal detector 101 may include at least one detection part 1011, a first processing module 1012, and a communication module 1013. The first processing module 1012 is configured to compare a change amplitude of optical signal strength detected by each detection part 1011 with a specified threshold, to determine a target detection part. The target detection part is a detection part 1011 in which a change amplitude of optical signal strength of a signal detection area exceeds the specified threshold. The communication module 1013 is configured to send identification information of the target detection part 1011 to a processing apparatus. During specific implementation, the first processing module 1012 may be in electrical signal connection to each detection part 1011 in the signal detector 101.

Optionally, the communication module 1013 may be a component having a communication function, for example, a Bluetooth module or a SIM card.

FIG. 9 is a diagram of another structure of a signal detector according to an embodiment of this application. As shown in FIG. 9, the signal detector 101 may include a plurality of detection part groups 1011m, and each detection part group 1011m may include a plurality of detection parts 1011. In FIG. 9, an example in which the signal detector 101 includes three detection part groups 1011m, and each detection part group 1011m includes six detection parts 1011 is used for illustration. During specific implementation, a quantity of detection part groups 1011m and a quantity of detection parts 1011 in each detection part group 1011m may be set according to an actual requirement, and this is not limited herein.

Still refer to FIG. 9. The signal detector 101 may further include a plurality of second processing modules 1014. Each detection part group 1011m is in electrical signal connection to one second processing module 1014. The second processing module 1014 is configured to: compare a change amplitude of optical signal strength detected by each detection part 1011 in the connected detection part group 1011m with a specified threshold, to determine a target detection part; and send identification information of the target detection part 1011 to a first processing module 1012. The target detection part 1011 is a detection part 1011 in which a change amplitude of optical signal strength of a signal detection area 201 exceeds the specified threshold. In this embodiment of this application, the plurality of detection parts 1011 in the signal detector 101 are divided into a plurality of detection part groups 1011m, and second processing modules 1014 that one-to-one correspond to the plurality of detection part groups 1011m are disposed. The second processing module 1014 processes detection data generated by each detection part 1011 in a corresponding detection part group 1011m, and sends a processing result (that is, identification information of a detection part 1011 detecting that the change amplitude of the optical signal strength exceeds the specified threshold) to the first processing module 1012, so that a data processing amount of the first processing module 1012 can be reduced, and a data processing speed can be improved.

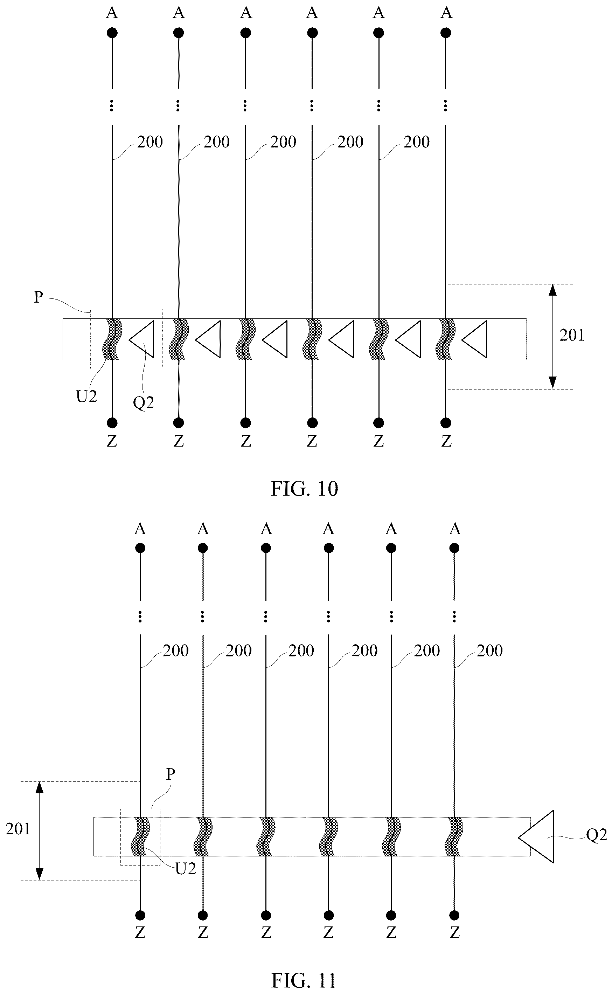

FIG. 10 is a diagram of another structure of a signal detector according to an embodiment of this application. As shown in FIG. 10, a detection part may include a second clamping member P and a light-sensitive sensor (not shown in the figure). The second clamping member P is configured to clamp a signal detection area 201 of any optical fiber 200, to cause a specified degree of macrobending on the optical fiber 200, leading to generation of leakage light of the optical fiber 200 in the signal detection area 201. The light-sensitive sensor is located inside the second clamping member P and is configured to detect light intensity of the leakage light of the optical fiber 200 in the signal detection area 201.

In a fiber seeking process, the second clamping member P of the detection part may clamp the signal detection area 201 of the optical fiber 200, to cause the specified degree of macrobending on the optical fiber 200 in the signal detection area 201. For example, a radius of the macrobending may be about 5.9 mm, leading to generation of leakage light of the optical fiber 200 in the signal detection area 201. The light-sensitive sensor located inside the second clamping member P may detect light intensity of the leakage light, to detect optical signal strength in the signal detection area 201.

In a possible implementation, the second clamping member P may include a slot U2 and a sliding cover Q2. The slot U2 and the sliding cover Q2 cooperate with each other, to clamp the signal detection area 201 of the optical fiber 200 and cause the specified degree of macrobending on the optical fiber 200. During specific implementation, a sliding rail may be disposed in the detection part, the sliding cover Q2 may slide along the sliding rail, and the sliding cover Q2 may be pushed to slide to cooperate with the slot U2, to cause macrobending on the optical fiber 200. Alternatively, a button for controlling slide of the sliding cover Q2 may be disposed in the detection part, and the button is used to control the sliding cover Q2 to cooperate with the slot U2, to cause macrobending on the optical fiber 200. Alternatively, a bolt for driving the sliding cover Q2 to move may be disposed in the detection part, and the sliding cover Q2 is driven to move by screwing the bolt, so as to cooperate with the slot U2 to cause macrobending on the optical fiber 200. Certainly, other manners may alternatively be used to control the slide of the sliding cover Q2. Details are not described herein one by one.

FIG. 11 is a diagram of another structure of a signal detector according to an embodiment of this application. As shown in FIG. 11, a plurality of second clamping members P may share a same sliding cover Q2. During specific implementation, a plurality of optical fibers 200 may be placed in a plurality of slots U2 respectively, and then the sliding cover Q2 shared by the slots U2 is controlled to slide, so that the sliding cover Q2 cooperates with the slots U2, to cause a specified degree of macrobending on the plurality of optical fibers 200. In this way, the macrobending on the plurality of optical fibers 200 may be controlled simultaneously, so that an operation procedure is simplified.

In FIG. 10 and FIG. 11, an example in which the slot U2 is in a curve shape is used for illustration. During specific implementation, the shape of the slot U2 may alternatively be in a straight line shape, or the shape of the slot U2 may alternatively be in another curve shape. This is not limited herein.

In another possible implementation, the second clamping member may alternatively be a fixture, and a light-sensitive sensor is disposed inside the fixture. In a fiber seeking process, the fixture may be opened for placing a to-be-sought optical fiber inside the fixture, and the fixture is closed to cause the specified degree of macrobending on the optical fiber. Certainly, the second clamping member in this embodiment of this application may alternatively be implemented in another manner. Details are not described herein one by one.

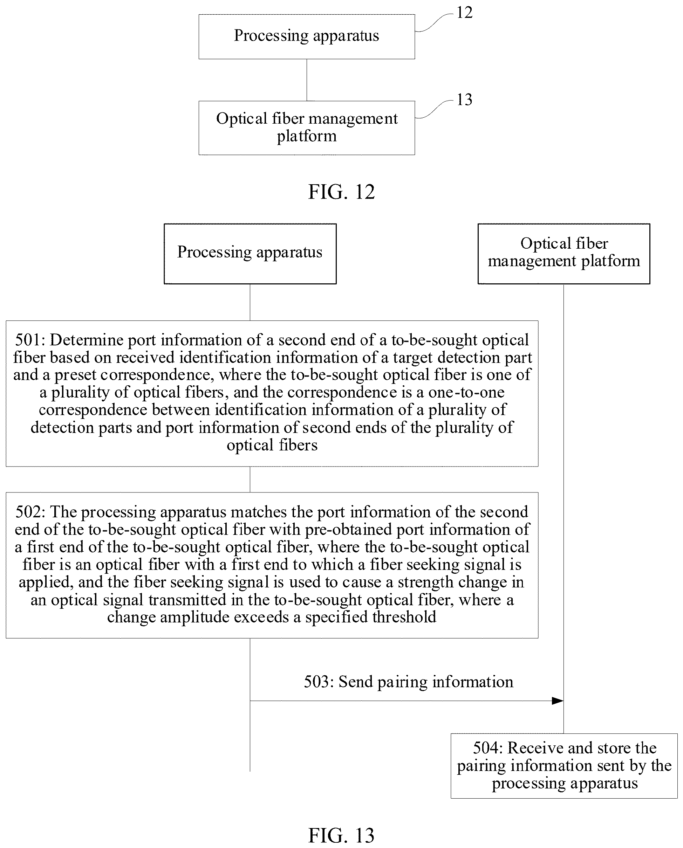

Based on a same technical concept, an embodiment of this application further provides another fiber seeking system. FIG. 12 is a diagram of a structure of another fiber seeking system according to an embodiment of this application. As shown in FIG. 12, the fiber seeking system provided in this embodiment of this application may include a processing apparatus 12 and an optical fiber management platform 13. The optical fiber management platform 13 is configured to receive and store pairing information sent by the processing apparatus 12. The pairing information includes port information of a first end and port information of a second end of a to-be-sought optical fiber. For implementations of the processing apparatus 12 and the optical fiber management platform 13 in the fiber seeking system shown in FIG. 12, refer to the implementations of the processing apparatus 12 and the optical fiber management platform 13 in the fiber seeking system shown in FIG. 1 and FIG. 2. Details are not repeated.

Based on a same technical concept, an embodiment of this application further provides another fiber seeking method. The fiber seeking method may be applied to the fiber seeking system shown in FIG. 12. FIG. 13 is an interaction diagram of another fiber seeking method according to an embodiment of this application. As shown in FIG. 13, the another fiber seeking method provided in this embodiment of this application may include the following steps.

S501: A processing apparatus determines port information of a second end of a to-be-sought optical fiber based on received identification information of a target detection part and a preset correspondence, where the to-be-sought optical fiber is one of a plurality of optical fibers, and the correspondence is a one-to-one correspondence between identification information of a plurality of detection parts and port information of second ends of the plurality of optical fibers.

S502: The processing apparatus matches the port information of the second end of the to-be-sought optical fiber with pre-obtained port information of a first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds a specified threshold.

S503: The processing apparatus sends pairing information to an optical fiber management platform. The pairing information includes the port information of the first end and the port information of the second end of the to-be-sought optical fiber.

S504: The optical fiber management platform receives and stores the pairing information sent by the processing apparatus.

In this embodiment of this application, when fiber seeking is performed on the plurality of optical fibers, a signal detection area of each optical fiber may be clamped by a detection part, and a correspondence between identification information of the detection part and port information of a second end of the optical fiber is pre-stored in the processing apparatus. Then, one optical fiber is selected from the plurality of optical fibers to be used as the to-be-sought optical fiber, the port information of the first end of the to-be-sought optical fiber is stored in the processing apparatus, and the fiber seeking signal is applied to a signal input area of the to-be-sought optical fiber. The processing apparatus may perform the foregoing steps S501 to S503. Therefore, according to the fiber seeking method provided in this embodiment of this application, port information of two ends of an optical fiber may be quickly and accurately matched. In addition, the optical fiber management platform may perform step S504, to implement digital management of pairing information of an optical fiber.

In this embodiment of this application, step S501 may be performed with reference to the foregoing step S302, step S502 may be performed with reference to the foregoing step S303, step S503 may be performed with reference to the foregoing step S304, and step S504 may be performed with reference to the foregoing step S305. Details are not repeated.

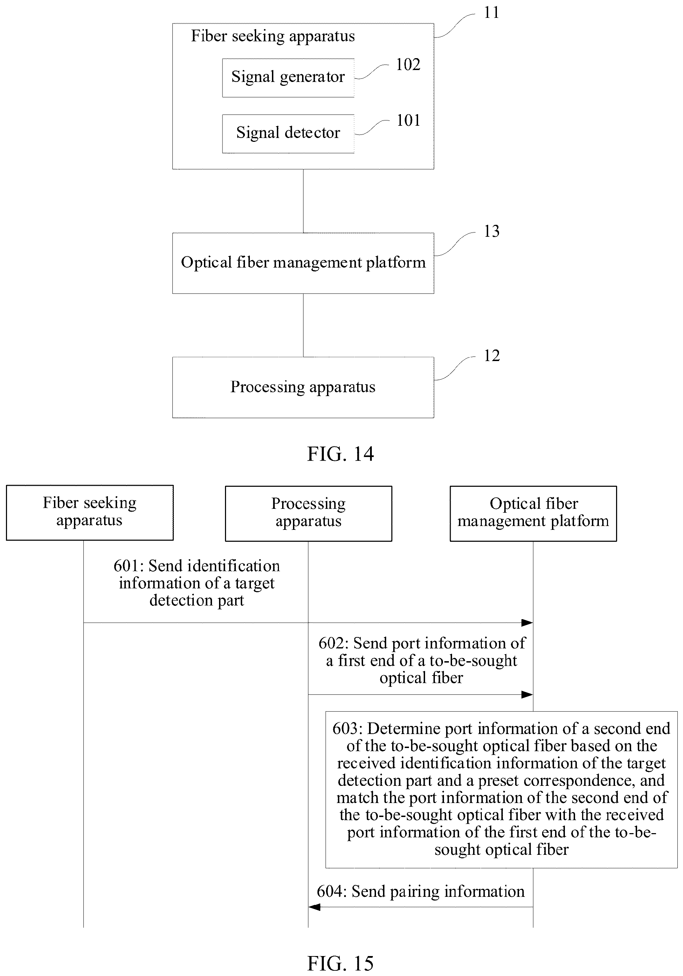

Based on a same technical concept, an embodiment of this application further provides another fiber seeking system. FIG. 14 is a diagram of a structure of another fiber seeking system according to an embodiment of this application. As shown in FIG. 14, the another fiber seeking system provided in this embodiment of this application may include a fiber seeking apparatus 11, a processing apparatus 12, and an optical fiber management platform 13. The fiber seeking system is configured to match port information of a first end with port information of a second end of an optical fiber.

The fiber seeking apparatus 11 may include a signal detector 101. The signal detector 101 includes at least one detection part, a first processing module, and a communication module. Each detection part is configured to clamp a signal detection area of an optical fiber and is configured to detect optical signal strength in the signal detection area of the clamped optical fiber. Different detection parts are configured to clamp signal detection areas of different optical fibers and are configured to detect optical signal strength in the signal detection areas of the clamped different optical fibers. A signal detection area of any optical fiber is close to a second end of the optical fiber.

The first processing module is configured to compare a change amplitude of the optical signal strength detected by each detection part with a specified threshold, to determine a target detection part. The target detection part is a detection part in which the change amplitude of the optical signal strength of the signal detection area exceeds the specified threshold.

The communication module is configured to send identification information of the target detection part to the optical fiber management platform 13. The processing apparatus 12 is configured to send port information of a first end of a to-be-sought optical fiber to the optical fiber management platform 13. The to-be-sought optical fiber is an optical fiber with a first end to which a fiber seeking signal is applied, and the fiber seeking signal is used to cause a strength change in an optical signal transmitted in the optical fiber, where a change amplitude exceeds the specified threshold. The optical fiber management platform 13 is configured to: determine port information of a second end of the to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers; and match the port information of the second end of the to-be-sought optical fiber with the received port information of the first end of the to-be-sought optical fiber, where the to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds the specified threshold. In addition, the optical fiber management platform 13 may further send matched pairing information of the optical fiber to the processing apparatus 12, where the pairing information includes the port information of the first end and the port information of the second end of the to-be-sought optical fiber, to facilitate presenting the pairing information of two ends of the optical fiber to a user.

A difference between the fiber seeking system shown in FIG. 14 and the fiber seeking systems shown in FIG. 1 and FIG. 2 lies in that, in the fiber seeking system shown in FIG. 14, the signal detector 101 is configured to send the identification information of the target detection part to the optical fiber management platform 13, the processing apparatus 12 is configured to send the port information of the first end of the to-be-sought optical fiber to the optical fiber management platform 13, and the optical fiber management platform 13 performs data processing, determines the port information of the second end of the to-be-sought optical fiber, and matches the port information of the two ends of the to-be-sought optical fiber. Because the optical fiber management platform 13 has a powerful processing function, in this embodiment of this application, a complex data processing process is performed in the optical fiber management platform 13, so that a data processing amount of the processing apparatus 12 can be reduced, and data processing efficiency of the fiber seeking system can be improved.

For a specific implementation of the fiber seeking apparatus in the fiber seeking system shown in FIG. 14, refer to the specific implementation of the fiber seeking apparatus in the fiber seeking systems shown in FIG. 1 and FIG. 2. Details are not repeated.

Based on a same technical concept, an embodiment of this application further provides another fiber seeking method. The fiber seeking method may be applied to the fiber seeking system shown in FIG. 14. FIG. 15 is an interaction diagram of another fiber seeking method according to an embodiment of this application. As shown in FIG. 15, the another fiber seeking method provided in this embodiment of this application may include the following steps.

S601: A fiber seeking apparatus sends identification information of a target detection part in which a change amplitude of optical signal strength exceeds a specified threshold to an optical fiber management platform.

S602: The processing apparatus sends port information of a first end of a to-be-sought optical fiber to the optical fiber management platform, where the to-be-sought optical fiber is an optical fiber with a first end to which a fiber seeking signal is applied, and the fiber seeking signal is used to cause a strength change in an optical signal transmitted in the optical fiber, where a change amplitude exceeds a specified threshold.

S603: The optical fiber management platform determines port information of a second end of the to-be-sought optical fiber based on the received identification information of the target detection part and a preset correspondence, where the to-be-sought optical fiber is one of a plurality of optical fibers, and the correspondence is a one-to-one correspondence between identification information of a plurality of detection parts and port information of second ends of the plurality of optical fibers; and the optical fiber management platform matches the port information of the second end of the to-be-sought optical fiber with the received port information of the first end of the to-be-sought optical fiber. The to-be-sought optical fiber is an optical fiber with a first end to which a fiber seeking signal is applied, and the fiber seeking signal is used to cause a strength change in an optical signal transmitted in the to-be-sought optical fiber, where a change amplitude exceeds the specified threshold.

In addition, the foregoing fiber seeking method may further include the following step.

S604: The optical fiber management platform sends pairing information to the processing apparatus. The pairing information includes the port information of the first end and the port information of the second end of the to-be-sought optical fiber.

In this embodiment of this application, when fiber seeking is performed on the plurality of optical fibers, a signal detection area of each optical fiber may be clamped by a detection part, and a correspondence between identification information of the detection part and port information of a second end of the optical fiber is pre-stored in the processing apparatus. Then, one optical fiber is selected from the plurality of optical fibers to be used as the to-be-sought optical fiber, the port information of the first end of the to-be-sought optical fiber is stored in the processing apparatus, and the fiber seeking signal is applied to a signal input area of the to-be-sought optical fiber. The fiber seeking apparatus may perform step S601, the processing apparatus may perform step S602, and the optical fiber management platform may perform steps 603 and 604. Therefore, according to the fiber seeking method provided in this embodiment of this application, port information of two ends of an optical fiber can be quickly and accurately matched, and digital management of pairing information of the optical fiber can be implemented.

Although some embodiments of this application are described, a person skilled in the art can make changes and modifications to these embodiments after they learn of a basic inventive concept. Therefore, the following claims are intended to be construed as to cover the embodiments and all changes and modifications falling within the scope of this application.

Clearly, a person skilled in the art can make various modifications and variations to embodiments of this application without departing from the spirit and scope of embodiments of this application. In this case, this application is intended to cover these modifications and variations of embodiments of this application provided that they fall within the scope of protection defined by the following claims and their equivalent technologies.

## Claims

1. A fiber seeking apparatus, comprising a signal detector, wherein the signal detector comprises at least one detection part, a first processing module, and a communication module;
each of the at least one detection part is configured to clamp a signal detection area of an optical fiber and is configured to detect optical signal strength in the signal detection area of the clamped optical fiber; and different detection parts are configured to clamp signal detection areas of different optical fibers and are configured to detect optical signal strength in the signal detection areas of the clamped different optical fibers, wherein a signal detection area of any optical fiber is close to a second end of the any optical fiber;
the first processing module is configured to compare a change amplitude of the optical signal strength detected by each detection part with a specified threshold, to determine a target detection part, wherein the target detection part is a detection part in which the change amplitude of the optical signal strength of the signal detection area exceeds the specified threshold; and
the communication module is configured to send identification information of the target detection part to a processing apparatus.

2. The fiber seeking apparatus according to claim 1, wherein the fiber seeking apparatus further comprises a signal generator; and
the signal generator is configured to clamp a signal input area of the any optical fiber and is configured to apply a fiber seeking signal to the signal input area of the clamped optical fiber, the fiber seeking signal is used to cause a strength change in an optical signal transmitted in the optical fiber, and the signal input area of the any optical fiber is close to a first end of the any optical fiber.

3. The fiber seeking apparatus according to claim 2, wherein the signal generator comprises a first clamping member; and
the first clamping member is configured to clamp the signal input area of the any optical fiber, to cause a specified degree of macrobending on the any clamped optical fiber, leading to generation of leakage light of the any optical fiber in the signal input area, so as to apply the fiber seeking signal to the signal input area.

4. The fiber seeking apparatus according to claim 2 or 3, wherein the signal generator further comprises a signal source configured to provide the fiber seeking signal; and
the signal source is configured to: when no service light is transmitted in the any optical fiber, inject the fiber seeking signal into the first end of the any optical fiber, to apply the fiber seeking signal to the any optical fiber.

5. The fiber seeking apparatus according to any one of claims 1 to 4, wherein the signal detector comprises a plurality of detection part groups, and each detection part group comprises a plurality of detection parts;
the signal detector further comprises a plurality of second processing modules; and
each detection part group is in electrical signal connection to one second processing module, and the second processing module is configured to: compare a change amplitude of optical signal strength detected by each detection part in the connected detection part group with the specified threshold, to determine the target detection part, and send the identification information of the target detection part to the first processing module.

6. The fiber seeking apparatus according to any one of claims 1 to 5, wherein the detection part comprises a second clamping member and a light-sensitive sensor;
the second clamping member is configured to clamp the signal detection area of the any optical fiber, to cause a specified degree of macrobending on the any optical fiber, leading to generation of leakage light of the any optical fiber in the signal detection area; and
the light-sensitive sensor is located inside the second clamping member and is configured to detect light intensity of the leakage light of the any optical fiber in the signal detection area.

7. The fiber seeking apparatus according to claim 6, wherein the second clamping member comprises a slot and a sliding cover; and
the slot and the sliding cover cooperate with each other, to clamp the signal detection area of the optical fiber and cause the specified degree of macrobending on the optical fiber.

8. The fiber seeking apparatus according to claim 6, wherein the second clamping member is a fixture.

9. A processing apparatus, comprising:
a transceiver unit, configured to receive identification information that is of a target detection part and that is sent by a signal detector; and
a processing unit, configured to:
determine port information of a second end of a to-be-sought optical fiber based on the received identification information of the target detection part and a preset correspondence, wherein the to-be-sought optical fiber is one of a plurality of optical fibers, and the correspondence is a one-to-one correspondence between identification information of a plurality of detection parts and port information of second ends of the plurality of optical fibers; and
match the port information of the second end of the to-be-sought optical fiber with pre-obtained port information of a first end of the to-be-sought optical fiber, wherein the to-be-sought optical fiber is an optical fiber with a first end to which a fiber seeking signal is applied, and the fiber seeking signal is used to cause a strength change in an optical signal transmitted in the to-be-sought optical fiber, wherein a change amplitude exceeds a specified threshold.

10. The processing apparatus according to claim 9, further comprising a storage unit, wherein
the transceiver unit is further configured to receive the port information of the first end of the to-be-sought optical fiber; and
the processing unit is further configured to store, into the storage unit, the port information that is of the first end of the to-be-sought optical fiber and that is received by the transceiver unit.

11. The processing apparatus according to claim 9 or 10, wherein the transceiver unit is further configured to send pairing information to an optical fiber management platform, and the pairing information comprises the port information of the first end and the port information of the second end of the to-be-sought optical fiber.

12. A fiber seeking method applied to a processing apparatus, comprising:
receiving identification information that is of a target detection part and that is sent by a signal detector;
determining port information of a second end of a to-be-sought optical fiber based on the received identification information of the target detection part and a preset correspondence, wherein the to-be-sought optical fiber is one of a plurality of optical fibers, and the correspondence is a one-to-one correspondence between identification information of a plurality of detection parts and port information of second ends of the plurality of optical fibers; and
matching the port information of the second end of the to-be-sought optical fiber with pre-obtained port information of a first end of the to-be-sought optical fiber, wherein the to-be-sought optical fiber is an optical fiber with a first end to which a fiber seeking signal is applied, and the fiber seeking signal is used to cause a strength change in an optical signal transmitted in the to-be-sought optical fiber, wherein a change amplitude exceeds a specified threshold.

13. The fiber seeking method according to claim 12, wherein before matching the port information of the second end of the to-be-sought optical fiber with the pre-obtained port information of the first end of the to-be-sought optical fiber, the method further comprises:
receiving and storing the port information of the first end of the to-be-sought optical fiber.

14. The fiber seeking method according to claim 12 or 13, further comprising:
sending pairing information to an optical fiber management platform, wherein the pairing information comprises the port information of the first end and the port information of the second end of the to-be-sought optical fiber.

15. A fiber seeking system, comprising: the fiber seeking apparatus according to any one of claims 1 to 8, and the processing apparatus according to any one of claims 9 to 11.

16. The fiber seeking system according to claim 15, further comprising an optical fiber management platform, wherein
the optical fiber management platform is configured to receive and store pairing information sent by the processing apparatus, and the pairing information comprises port information of a first end and port information of a second end of the to-be-sought optical fiber.

17. The fiber seeking system according to claim 16, wherein a signal detector in the fiber seeking apparatus is specifically configured to send, to the optical fiber management platform, identification information of a target detection part in which a change amplitude of optical signal strength exceeds a specified threshold; and
the optical fiber management platform is further configured to receive the identification information of the target detection part, and send the received identification information of the target detection part to the processing apparatus.

18. A fiber seeking system, comprising the processing apparatus according to any one of claims 9 to 11 and an optical fiber management platform, wherein
the optical fiber management platform is configured to receive and store pairing information sent by the processing apparatus, and the pairing information comprises port information of a first end and port information of a second end of the to-be-sought optical fiber.
